(19) Europäisches Patentamt
European Patent Office
Office européen des brevets

(11) Numéro de publication: **0 079 838**
**B1**

(12) # FASCICULE DE BREVET EUROPEEN

(45) Date de publication du fascicule du brevet: **13.05.87**

(51) Int. Cl.⁴: **C 02 F 1/52**

(21) Numéro de dépôt: **82402081.2**

(22) Date de dépôt: **15.11.82**

(54) **Adjuvant de floculation et procédé pour la purification des eaux.**

(30) Priorité: **16.11.81 FR 8121360**

(43) Date de publication de la demande: **25.05.83 Bulletin 83/21**

(45) Mention de la délivrance du brevet: **13.05.87 Bulletin 87/20**

(84) Etats contractants désignés: **BE CH DE FR GB IT LI NL SE**

(56) Documents cités:
**EP - A - 0 079 836**
**EP - A - 0 079 837**
**DE - B - 1 297 048**
**FR - A - 1 441 205**
**FR - A - 2 305 222**
**FR - A - 2 331 596**
**FR - A - 2 378 851**
**US - A - 3 657 182**
**US - A - 3 681 283**

**Le dossier contient des informations techniques présentées postérieurement au dépôt de la demande et ne figurant pas dans le présent fascicule.**

(73) Titulaire: **RHONE-POULENC SPECIALITES CHIMIQUES, "Les Miroirs" 18, Avenue d'Alsace, F-92400 Courbevoie (FR)**

(72) Inventeur: **Le Du, Yannick, 13 bis, rue Edmond Nocard, F-94700 Maisons-Alfort (FR)**
Inventeur: **Meiller, François, 10, rue Jeanne d'Arc, F-91120 Palaiseau (FR)**

(74) Mandataire: **Dutruc-Rosset, Marie-Claude et al, RHONE-POULENC INTERSERVICES Service Brevets Chimie 25, Quai Paul Doumer, F-92408 Courbevoie Cédex (FR)**

EP 0 079 838 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne l'utilisation d'un adjuvant de floculation pour la purification des eaux et notamment, pour la purification des eaux potables. Elle concerne également un nouveau procédé de floculation pour la purification des eaux mettant en œuvre ledit adjuvant.

Il est connu, dans le traitement des eaux et des boues, de faire appel à des agents de floculation constitués par des sels métalliques tels que $CaCl_2$, $FeCl_2$, $FeCl_3$, $FeSO_4$ ou $Fe_2(SO_4)_3$ ou des mélanges de ces sels métalliques comme décrit dans le brevet français 1 399 351.

On utilise aussi fréquemment du sulfate d'aluminium. Mais on sait que lors de la floculation, deux phénomènes viennent généralement se superposer: d'une part la neutralisation des charges, d'autre part le rassemblement des particules neutralisées en flocs plus ou moins gros. Le sulfate d'aluminium et les différents composés du fer ne donnent généralement lieu qu'au premier phénomène en ne donnant que des petits flocs qui décantent lentement. Les agents ne donnent donc pas toujours un précipité possédant les caractéristiques voulues pour une bonne décantation.

C'est pour cette raison que l'on a employé des gommes naturelles seules ou en combinaison avec des sels minéraux (fécule de pomme de terre, alginates, dextrines, gélatine) puis des gommes synthétiques de masse moléculaire élevée solubles dans l'eau utilisables comme agents de floculation ou comme adjuvants de floculation.

La préparation d'un agent de sédimentation contenant de la gomme de caroube et une quantité considérable de sulfate de soude est décrite par exemple dans le brevet DE-B-1 297 048.

Lesdites gommes peuvent être obtenues, soit par synthèse entièrement chimique, comme par exemple les acides polyacryliques ou les polyacrylamides ou soit par biosynthèse, comme par exemple la Gomme Xanthane obtenue par fermentation d'un hydrate de carbone sous l'action de bactéries du genre Xanthomonas. Pour illustrer la mise en œuvre de la Gomme Xanthane, lors de la purification des eaux, on peut citer la demande de brevet français n° 78/36 644.

Or l'inconvénient que présente la plupart des gommes précitées est qu'elles sont difficiles à solubiliser ce qui ne facilite pas leur mise en œuvre en tant qu'adjuvants de floculation.

Pour faciliter la dispersion du polymère floculant, on a proposé une composition contenant un diluant solide et de petites quantités d'eau (FR-A-2 331 596). On évite ainsi la formation d'agglomérats mais la durée de dissolution n'apparaît pas être réduite.

Une des grandes difficultés du traitement des eaux réside aussi dans le fait que la nature des eaux à traiter est éminemment variable d'un lieu à un autre et même pour un même lieu d'un jour à l'autre, ce qui fait qu'une solution valable pour une eau n'est pas transposable dès que les conditions changent.

Il était donc souhaitable d'apporter une solution au problème de la mise en œuvre des gommes en tant qu'adjuvant de floculation et de trouver une solution valable d'une manière générale, quelle que soit la nature des eaux à traiter.

Il a maintenant été trouvé et c'est ce qui constitue un des objets de l'invention, un nouvel adjuvant de floculation caractérisé par le fait qu'il est préparé par mélange à sec d'une gomme hydrosoluble et d'un matériau apportant de l'eau qui peut être soit de l'eau liée ou d'absorption, soit de l'eau de cristallisation, la quantité d'eau étant telle que le rapport pondéral gomme/eau varie de 6,5 à 1 et la quantité de matériau apportant l'eau étant telle que le rapport pondéral matériau apportant l'eau/eau varie de 0,3 à 2,6.

Les compositions à base de gommes hydrosolubles constituant l'adjuvant de floculation et leur préparation sont décrites dans EP-A-0 079 836 et EP-A-0 079 837.

Par gomme hydrosoluble, on désigne les gommes couramment utilisées dans le traitement des eaux et qui peuvent être des gommes naturelles, des biogommes et des gommes synthétiques.

Dans l'exposé qui suit de la présente invention, on entend:

– par gomme: tout matériau polymère qui peut être dissous ou dispersé dans l'eau pour donner des solutions ou dispersions aqueuses;

– par gommes naturelles: les polymères naturels dérivés de sources végétales ou animales;

– par biogomme ou hétéropolysaccharide d'origine microbienne: les produits exocellulaires linéaires de poids moléculaire élevé, de préférence, supérieur à un million, obtenus par fermentation d'un hydrate de carbone sous l'action de bactéries du genre Xanthomonas ou Arthrobacter ou des champignons appartenant au genre Sclerotium. On désigne, plus particulièrement, par Gomme Xanthane le produit obtenu par fermentation d'un hydrate de carbone sous l'action des bactéries du genre Xanthomonas.

– par gommes synthétiques: les polymères obtenus entièrement par synthèse chimique.

Ci-après, on précisera la nature des constituants de l'adjuvant de floculation et d'abord celle de la gomme hydrosoluble.

La gomme hydrosoluble peut être choisie dans la classe des gommes naturelles.

Les gommes naturelles sont des produits largement décrits dans la littérature (R.L. WHISTLER, Industrial Gums. Polysaccharides and their derivatives, 2eme Edition, Academic Press, 1973).

Parmi les gommes végétales susceptibles d'être mises en œuvre dans les compositions de l'invention, on peut citer:

– les gommes d'algues marines: agar-agar, algine, carraghénine;

– les gommes d'exsudats végétaux: gomme arabique, adragante;

– les gommes de graines végétales: gomme de caroube, gomme de guar;

– les gommes d'extraits végétaux: la pectine.

L'agar-agar est extrait d'algues rouges (Gelidium sp.) au moyen d'eau bouillante. C'est un

galactane sulfate linéaire: copolymère alterné d'β-D-galactopyranose (liaison β 1→4) et d'anhydro-3–6 α-L-galactopyranose (liaison α 1→3) porteur d'un petit nombre de groupements sulfate.

L'algine est un polysaccharide se trouvant dans des algues brunes (Macrocystis pyrifera-Laminaria digitata). Le plus courant est l'alginate de sodium qui est un copolymère linéaire à haut poids moléculaire contenant des unités d'acide β-D-mannopyranosyluronique (liaison 1→4) et d'acide α-L gulopyranosyluronique (liaison 1→4).

Les carraghénines proviennent d'algues rouges (Chondrus crispus, Gigartina stellata) et sont des mélanges de polysaccharides que l'on peut fractionner en carraghénates-kappa, -lambda, -iota. Les carraghénates contiennent les unités prédominantes suivantes: sulfate-4-D-galactose (liaison 1→3) et anhydro-3,6 D-galactose (liaison 1→4) pour le carraghénate-kappa; disulfate-2,6 D-galactose (liaison 1→4) et sulfate-2 D-galactose (liaison 1→3) pour le carraghénate-lambda; sulfate-4 D-galactose (liaison 1→3) et sulfate-2 anhydro-3,6 D-galactose (liaison 1→4) pour le carraghénate-iota.

La gomme arabique est produite par des arbres appartenant à la famille des acacias (Acacia sp.). C'est un colloïde de structure branchée encore incomplètement élucidée. La chaîne principale est constituée de D-galactopyranose relié par des liaisons β(1→6) et β(1→4): elle porte des chaînes latérales de D-galactopyranose, d'arabinose, de rhamnose et d'acide glucuronique attachées par des liaisons 1→3. Sa masse moléculaire en poids est de 200 000 à 300 000.

La gomme adragante provenant d'Astragalus gummifer est une substance de structure complexe qui comprend deux fractions: l'une est constituée d'acide galacturonique, d'arabinose et de xylose; l'autre contient des acides polyméthoxylés. Elle a une masse moléculaire en poids élevée (840 000).

La gomme de caroube provient des graines de Ceratonia siliqua. C'est un galactomannane de poids moléculaire d'environ 310 000 qui est essentiellement constitué par un polymère droit de D-mannose (liaison 1→4) avec des branchements latéraux constitués chacun d'un résidu galactose sur tous les quatre ou cinq groupements mannose attachés par des liaisons 1→6.

La gomme de guar est dérivé du Cyamopsis tétragonolobus de la famille des légumineuses. Sa masse moléculaire moyenne en poids est de 200 000 à 300 000. Sa structure est semblable à celle de la gomme de caroube et diffère seulement en ce que le nombre de chaînes latérales de D-galactose est plus grand.

La pectine se rencontre principalement dans les parois cellulaires et les espaces intercellulaires des tissus végétaux. La source commerciale de la pectine est constituée par les déchets des agrumes-albédo. La pectine peut être considérée comme un polymère linéaire de l'acide galacturonique dont une partie plus ou moins grande des groupements carboxyle sont estérifiés par des radicaux méthyle. En fonction de la teneur en groupements méthoxyle $-O-CH_3$, on classe les pectines. On distingue les pectines (H.M.) à haute teneur en groupements méthoxyle (70% et plus des groupements carboxyle sont estérifiés) et les pectines (L.M.) à faible teneur en groupements méthoxyle (moins de 50% des groupements carboxyle sont estérifiés). Le poids moléculaire des pectines est très variable de 1000 à 100 000 et varie en fonction de la longueur de la chaîne qui peut comprendre quelques unités jusqu'à plusieurs centaines d'unités d'acide galacturonique.

En ce qui concerne les gommes d'origine animale, on peut mentionner la gélatine. Pour une description plus complète de cette gomme, on se référera à l'ouvrage de Martin GLICKSMAN, Gum Technology in the Food Industry, Academic Press, 1969, p. 359.

Dans la liste précitée, les gommes naturelles utilisées préférentiellement sont les suivantes: alginates, la gomme adragante, la pectine, la gélatine.

La gomme hydrosoluble peut être une biogomme. Comme mentionné précédemment, la biogomme est obtenue par fermentation d'un hydrate de carbone sous l'action de bactéries du genre Xanthomonas, Arthrobacter ou champignons appartenant au genre Sclerotium.

Les espèces représentatives de bactéries ou de champignons, dont on peut se servir pour la fabrication de ces hétéropolysaccharides comprennent par exemple: le Xanthomonas Begoniae, le Xanthomonas Campestris, le Xanthomonas Carotea, le Xanthomonas Hederae, le Xanthomonas Incanae, le Xanthomonas Malvacearum, le Xanthomonas Papavericola, le Xanthomonas Phaseoli, le Xanthomonas Pisi, le Xanthomonas Vasculorum, le Xanthomonas Vesicatoria, le Xanthomonas Vitians, le Xanthomonas Pelargonii; l'Arthrobacter Stabilis, l'Arthrobacter Viscosus; le Sclerotium Glucanicum, le Sclerotium Rolfsii.

On peut faire fermenter toute une variété d'hydrates de carbone avec les micro-organismes appartenant aux genres précités pour fabriquer l'hétéropolysaccharide utilisé dans les compositions de l'invention. Les hydrates de carbone qui peuvent convenir comprennent le glucose, le saccharose, le fructose, le maltose, le lactose, l'amidon soluble, l'amidon de maïs, l'amidon de pomme de terre. La fermentation de l'hydrate de carbone se fait selon les procédés décrits dans la littérature (cf. par exemple les brevets américains n° 3 000 790, 3 271 267, 3 555 447, 3 391 060 et la demande française n° 78/01 572, publiée sous le n° 2 414 555).

Il peut être avantageux, avant l'emploi, de soumettre le moût fermenté à un chauffage dans un domaine de température de 80 à 130 °C pendant environ 10 minutes à environ 1 heure.

L'hétéropolysaccharide est isolé du moût de fermentation et est utilisé sous forme de poudre. La séparation de l'hétéropolysaccharide du moût, éventuellement chauffé au préalable comme indiqué ci-avant, peut se faire grâce aux méthodes habituelles, par exemple en le précipitant par addition à ce moût d'un alcool inférieur comme le

méthanol, l'éthanol, l'isopropanol, le butanol tertiaire ou d'acétone ou d'un mélange de ces agents de précipitation. Une fois précipité, l'hétéropolysaccharide est séparé, lavé avec le liquide de précipitation, puis il est séché et broyé.

On peut éventuellement soumettre l'hétéropolysaccharide à des opérations ultérieures de purifications: on peut faire appel dans cette optique aux méthodes connues de l'art antérieur (cf. brevet français n° 2 264 077 et brevet américain n° 3 729 460).

D'une manière préférentielle, on choisit l'hétéropolysaccharide dénommé Gomme Xanthane obtenue par fermentation d'un hydrate de carbone par une culture pure de Xanthomonas Campestris; ladite gomme étant extraite à l'isoproponal, séchée puis broyée.

La Gomme Xanthane est un hétéropolysaccharide de masse moléculaire supérieure à $10^6$. Elle contient du D-glucose, du D-mannose et du D-glucuronate dans les rapports molaires 2,8/2,0/2,0. Elle est partiellement acétylée avec environ 4,7% de radicaux acétyle. Elle contient aussi environ 3% de radicaux pyruvate fixés sur une seule chaîne latérale de maille de D-glucopyranosyle comme cétal.

Enfin, on peut faire appel aux gommes synthétiques hydrosolubles. Appartiennent à cette catégorie, les polymères et copolymères acryliques ainsi que leurs dérivés.

Plus précisément, on peut citer les polymères suivants et leurs dérivés: les acides polyacryliques et polyméthacryliques leurs sels ou leurs esters; les polyacrylamides et les polyméthacrylamides.

Toutes les gommes synthétiques précitées sont des produits connus, commercialisés et décrits dans la littérature. Pour les caractériser, on aura recours par exemple à l'encyclopédie «ENCYCLOPEDIA CHEMICAL TECHNOLOGY – Kirk OTHMER». On précisera, ci-après, le mode de préparation desdits polymères, à titre illustratif, sans pour autant limiter l'invention au polymère obtenu selon le procédé décrit.

Les acides acryliques et dérivés peuvent être polymérisés en masse, en solution aqueuse ou organique, en émulsion ou en dispersion aqueuse. Dans tous les cas, la polymérisation est effectuée au moyen d'un initiateur de polymérisation qui peut être un initiateur anionique, organométallique ou un radical libre produit par traitement thermique, par un système rédox ou sous l'effet d'un radiation. La polymérisation de l'acide acrylique et méthacrylique en solution peut être conduite dans l'eau en chauffant le monomère en présence d'initiateurs tels que l'eau oxygénée, le persulfate de potassium, le peroxyde d'acétyle ou en polymérisant le monomère à une température plus basse entre 50 et 100 °C en initiant la réaction par un système rédox persulfate de potassium et thiosulfate de sodium. Une polymérisation similaire en solution aqueuse peut être conduite en irradiant la solution aqueuse par des rayons U.V. On peut faire également, la polymérisation dans des solvants organiques comme le méthanol, le dioxanne en présence d'azobisisobutyronitrile et à haute température ou dans des solvants comme le benzène, le n-hexane avec comme initiateur le peroxyde de benzoyle, à température élevée, pour produire un polymère insoluble séparé du milieu par filtration.

Les sels d'acides acryliques et méthacryliques peuvent être polymérisés en milieu aqueux en présence d'initiateurs mais la plupart du temps, on prépare les sels d'acides polyacryliques et homologues en neutralisant le polymère correspondant avec une base organique ou inorganique.

On peut également obtenir un homopolymère à partir d'acrylates et méthacrylates d'aminoalcoyle éventuellement quaternisés. Généralement ils sont mis en œuvre sous la forme de leur chlorure et polymérisent en solution aqueuse dans les mêmes conditions que l'acide acrylique.

On peut également mettre en œuvre les polymères acrylamide qui concernent une large classe de monomères, l'acrylamide, le méthacrylamide et tous les dérivés N-substitués. L'acrylamide polymérise en solution aqueuse avec des initiateurs de radicaux libres tels que l'hydroperoxyde de t-butyle, l'eau oxygénée, les persulfates de métaux alcalins et d'ammonium, les chlorates, les perborates, les percarbonates .... On utilise des systèmes rédox du type persulfate d'ammonium et métabisulfite de potassium pour polymériser à basse température et obtenir de hauts poids moléculaires. Industriellement, la polymérisation est conduite en solution à 30–60% de monomère, à une température de 30–60 °C, en utilisant un catalyseur représentant 0,01 à 10% du poids de monomère à pH situé entre 3 et 6. La polymérisation dure de 3 à 6 heures. Le polymère est transformé en poudre selon les techniques usuelles: atomisation ou précipitation par les alcools inférieurs .... On peut aussi polymériser l'acrylamide en utilisant d'autres initiateurs composés azo, systèmes photochimiques, rayons X, U. V....

A côté des homopolymères précités, on peut également mettre en œuvre des copolymères solubles produits par copolymérisation de monomères hydrophiles. Par exemple, on peut copolymériser l'acrylamide, le méthacrylamide, les acides acryliques et méthacryliques, leurs sels et esters, les acrylates et méthacrylates d'aminoalcoyle éventuellement quaternisés.

Les polymères ou copolymères auxquels on fait appel dans les compositions de l'invention peuvent donc être de natures très diverses dès lors qu'ils sont solubles en milieu aqueux et sont utilisés pour le traitement des eaux.

Conviennent particulièrement bien à la mise en œuvre de l'invention les polymères ou copolymères de dérivés acryliques tels que l'acrylamide, le méthacrylamide, les acides acryliques et leurs sels et esters, les acrylates et méthacrylates d'aminoalcoyle éventuellement quaternisés qui sont obtenus selon le procédé décrit dans le brevet français 2 348 227 et qui consiste:

– à déposer en continu et en couche mince sur un support, une solution aqueuse de monomère acrylique contenant un promoteur de photopoly-

mérisation en particulier la benzoïne et ses éthers méthylique, éthylique, isopropylique à raison de 0,005 à 1% en poids par rapport au monomère de préférence 0,01 à 0,5%, ladite solution contenant moins de 1 mg d'oxygène par litre de solution de préférence moins de 0,5 mg/l;

– à soumettre la couche mince liquide à irradiation par un rayonnement de longueurs d'onde comprise entre 300 et 400 mμ, de préférence entre 330 et 400 mμ, pendant une durée allant de 1 à 20 mn, de préférence 3 à 7 mn, la puissance moyenne du rayonnement actif étant comprise entre 20 et 300 watts/m$^2$ l'atmosphère gazeuse recouvrant la solution soumise à photopolymérisation ayant une teneur en oxygène inférieure à 5% en volume, de préférence inférieure à 0,5%, le support étant refroidi pour éliminer les calories issues de la polymérisation;

– à maintenir la couche mince ayant subi un début de polymérisation au cours de la phase précédente, sur le support refroidi et en atmosphère débarrassée d'oxygène et à la soumettre à une irradiation par un rayonnement de longueurs d'onde comprises entre 300 et 450 mμ pendant une durée allant de 1 à 20 mn de préférence 3 à 10 mn, la puissance moyenne du rayonnement actif étant supérieure à 300 et inférieure à 2000 watts/m$^2$;

– à détacher la couche mince non liquide ainsi obtenue du support et à la soumettre à l'air, à une irradiation par un rayonnement de longueurs d'onde comprises entre 300 et 450 mμ, de préférence entre 330 et 400 mμ pendant une durée allant de 30 mn à 3 h, de préférence de 40 mn à 90 mn la puissance moyenne du rayonnement actif étant comprise entre 20 et 500 watts/m$^2$.

Le matériau apportant l'eau amène de l'eau qui peut être soit de l'eau liée ou d'adsorption, soit de l'eau de cristallisation. Appartiennent à la première catégorie de matériaux, les silices et les alumines hydratées mises en œuvre seules ou en mélange sous n'importe quelle forme naturelle ou synthétique.

C'est ainsi que l'on peut faire appel à des silices fines précipitées, se présentant sous la forme de particules fines à grande surface. Plus particulièrement, on a recours à des silices qui présentent une surface BET comprise entre 200 et 400 m$^2$/g. (La surface BET est déterminée selon la méthode de BRUNAUER-EMMETT-TELLER décrite dans «The Journal of the American Chemical Society» 60 – page 309, Février 1938). Le diamètre des particules ultimes de silice varient entre 200 et 800 Å.

Conviennent, également à l'invention les gels de silice hydratés en particulier les trois principaux types de gels suivants qui sont: les gels avec une surface BET de 750–800 m$^2$/g, un volume poreux de 0,37–0,40 cm$^3$/g, un diamètre moyen de particules de 22–26 Å; les gels avec une surface BET de 300–350 m$^2$/g, un volume poreux de 0,9–1,1 cm$^3$/g, un diamètre moyen de particules de 120–160 Å; les gels ayant une surface BET de 100–200 m$^2$/g, un volume poreux de 1,4–2,0 cm$^3$/g, un diamètre moyen de particules de 180–220 Å.

On peut aussi utiliser les gels de silice déshydratés qui présentent des surfaces BET de 10 à 500 m$^2$/g ayant un volume poreux de 0,5 à 1,1 cm$^3$/g et un diamètre poreux moyen variant de 30 à 3000 Å, de préférence de 600 à 3000 Å. Un traitement d'autoclavage décrit dans le brevet français 2 093 176 permet d'amener la silice, à la surface désirée.

Le matériau apportant l'eau peut être un hydrate d'alumine sous les deux formes d'hydratation: $Al_2O_3$, $3H_2O$ et $Al_2O_3$, $H_2O$. On peut les mettre en œuvre sous forme naturelle: hydrargillite ou gibbsite, bayerite, nordstrandite, bohmite, diaspore ou sous leur forme synthétique. On peut utiliser des gels d'alumine séchés du type bohmite qui présentent une surface de 200 à 400 m$^2$/g et des pores de 50 à 100 Å ou les différents produits commercialisés, en particulier, l'α-trihydrate obtenu selon le procédé BAYER ayant des particules sphéroidales avec des dimensions de 20 à 150 microns. Tous les composés précités sont des produits connus et décrits par exemple, dans l'encyclopédie «ENCYCLOPEDIA CHEMICAL TECHNOLOGY – Kirk OTHMER – Volume 2».

On peut également faire appel aux silicates d'aluminium hydratés sous la forme des argiles, des zéolithes naturelles ou des zéolithes synthétiques.

Comme exemples d'argiles susceptibles d'être employées, on peut citer celles qui appartiennent aux groupes suivants:
- type kaolin: kaolinite, dickite, nacrite, anauxite, halloysite, endelitte;
- type serpentine: chrysolite, amésite, cronstedite, chamosite, garnierite;
- type montmorillonite: montmorillonite (bentonite), beidellite, nontronite, hectorite, saponite, sauconite;
- type vermiculite ou chlorite;
- l'attapulgite ou la sépiolite.

On peut mettre en œuvre des zéolithes naturelles telles que: analcime, harmotome, phillipsite, gismondine, laumontite, erionite, offretite, levynite, faujasite, chabazite, gmelinite, natrolite, scolecite, mésolite, thomsonite, edingtonite, mordénite, ferrierite, epistilbite, heulandite, clinoptilolite, stilbite, brewsterite. D'une manière préférentielle, on choisit la faujasite ou la mordénite.

En ce qui concerne les zéolithes synthétiques, on peut utiliser les zéolithes commercialisées et qui sont: les zéolithes de type A, X, Y, L et celles qui reproduisent la structure de la mordénite, la chabazite et l'érionite. Les zéolithes X, Y présentent, généralement une surface BET de 800 m$^2$/g et un volume poreux respectivement de 0,36 cm$^3$/g et 0,34 cm$^3$/g. Les zéolithes de type A, plus particulièrement de type 4A ont une surface BET inférieure à 10 m$^2$/g et un volume poreux de 0,30 cm$^3$/g.

Pour une description détaillée des silicates d'aluminium hydratés, on se référera à la littérature: par exemple, pour les argiles à l'Encyclopédie «ENCYCLOPEDIA CHEMICAL TECHNOLOGY – Kirk OTHMER – Volume 5» et pour les zéolithes naturelles et synthétiques à l'ouvrage de Donald

W. BRECK – Zeolite Molecular Sieves, A-Wiley Interscience Publication – 1974.

Enfin comme matériau apportant l'eau, on peut également avoir recours aux hydrates des sels minéraux ou organiques des métaux, plus particulièrement des métaux alcalins ou alcalino-terreux. Plus spécifiquement, on peut citer les hydrates des sels suivants ou dérivés mis en œuvre seuls, en mélange ou sous forme de combinaisons: les carbonates, les halogénures, les nitrates, les phosphates, les silicates, les sulfates ainsi que les acétates, les citrates, les lactates, les laurates, les tartrates des sels de sodium, potassium, calcium, magnésium.

A titre d'exemples spécifiques, on peut nommer:
- acétate de sodium trihydraté: $NaC_2H_3O_2$, $3H_2O$
- carbonate de sodium heptahydraté: $Na_2CO_3$, $7H_2O$
- carbonate de sodium décahydraté: $Na_2CO_3$, $10H_2O$
- citrate de sodium pentahydraté: $Na_3C_6H_5O_7$, $5{,}5H_2O$
- orthophosphate de sodium dodécahydraté: $Na_3PO_4$, $12H_2O$
- tartrate de magnésium et de sodium décahydraté: $Na_2Mg(C_4H_4O_6)_2$, $10H_2O$
- sulfate de sodium heptahydraté: $Na_2SO_4$, $7H_2O$
- sulfate de sodium décahydraté: $Na_2SO_4$, $10H_2O$
- chlorure de potassium et de magnésium hexahydraté: KCl, $MgCl_2$, $6H_2O$
- sulfate de potassium et de magnésium hexahydraté: $K_2SO_4$, $MgSO_4$, $6H_2O$
- acétate de calcium dihydraté: $Ca(C_2H_3O_2)_2$, $2H_2O$
- carbonate de calcium hexahydraté: $CaCO_3$, $6H_2O$
- chlorure de calcium hexahydraté: $CaCl_2$, $6H_2O$
- citrate de calcium tétrahydraté: $Ca_3(C_6H_5O_7)_2$, $4H_2O$
- lactate de calcium pentahydraté: $Ca(C_3H_5O_3)_2$, $5H_2O$
- nitrate de calcium trihydraté: $Ca(NO_3)_2$, $3H_2O$
- nitrate de calcium tétrahydraté: $Ca(NO_3)_2$, $4H_2O$
- sulfate de calcium dihydraté: $CaSO_4$, $2H_2O$
- tartrate de calcium tétrahydraté: $CaC_4H_4O_6$, $4H_2O$
- acétate de magnésium tétrahydraté: $Mg(C_2H_3O_3)_2$, $4H_2O$
- carbonate de magnésium pentahydraté: $MgCO_3$, $5H_2O$
- chlorure de magnésium hexahydraté: $MgCl_2$, $6H_2O$
- lactate de magnésium trihydraté: $Mg(C_3H_5O_3)_2$, $3H_2O$
- nitrate de magnésium hexahydraté: $Mg(NO_3)_2$, $6H_2O$
- orthophosphate de magnésium octahydraté: $Mg_3(PO_4)_2$, $8H_2O$
- sulfate de magnésium heptahydraté: $MgSO_4$, $7H_2O$
- tartrate de magnésium pentahydraté: $MgC_4H_4O_6$, $5H_2O$

Dans l'ensemble des matériaux apportant l'eau précités, on choisit préférentiellement les silices fines précipitées qui sont capables d'adsorber 2 ou 3 fois leur poids d'eau.

On a constaté de manière inattendue que, le fait d'utiliser, à titre d'adjuvant de floculation, les compositions de l'invention procuraient des avantages au niveau de leur mise en œuvre qui sont une amélioration de la mise en dispersion de la gomme ainsi qu'une accélération de sa vitesse de dissolution.

Poursuivant ses recherches, la demanderesse a trouvé que les résultats obtenus étaient le plus souvent supérieurs lorsque l'on adjoignait un troisième additif tel qu'un tensio-actif de type anionique et/ou non ionique.

Une forme de réalisation préférentielle de l'invention consiste donc à utiliser comme adjuvant de floculation, les compositions à base de gommes hydrosolubles caractérisées par le fait qu'elles comprennent outre la gomme, un matériau apportant l'eau ou susceptible de la retenir par adsorption, un tensio-actif anionique et/ou non ionique.

Pour le choix de l'agent tensio-actif, on peut se reporter, entre autres, à l'encyclopédie «ENCYCLOPEDIA CHEMICAL TECHNOLOGY – Kirk OTHMER – volume 19» ou aux différents ouvrages de la Série Surfactant Sciences Series, Marcel DEKKER Inc – Vol. 1: Nonionic Surfactants de Martin J. SCHICK; Vol. 7: Anionic Surfactants de Warner M. LINFIELD ou à l'ouvrage de Mc. CUTCHEON'S: Detergents and Emulsifiers – International and North American Edition.

Comme exemples d'agents tensio-actifs anioniques utilisables, on peut citer:

- les savons de métaux alcalins tels que les sels sodiques ou potassiques d'acides gras saturés ou insaturés ayant de 8 à 24 atomes de carbone et de préférence de 14 à 20 ou des dérivés d'acides aminocarboxyliques comme le N-lauryl sarconisate de sodium, le N-acylsarconisate de sodium.

- les sulfonates alcalins tels que les alcoylsulfonates, les arylsulfonates ou les alcoylarylsulfonates; en particulier les alcoylsulfonates tels que par exemple les diesters de l'acide sulfosuccinique comme le diéthylhexylsulfosuccinate de sodium, le dioctylsulfosuccinate de sodium, les alcoylbenzènesulfonates de formule $R_1$–$C_6H_4$ $SO_3$ $M_1$ dans laquelle le radical $R_1$ est un radical alcoyle linéaire ou ramifié contenant de 8 à 13 atomes de carbone tel que par exemple un radical nonyle, dodécyle, tridécyle et $M_1$ représente un atome de sodium, de potassium, un radical ammonium, de la diéthanolamine ou de la triéthanolamine; les alcoylnaphtalènesulfonates de formule $(R-)_{no}-C_{10}H_{7-no}SO_3M_1$ dans laquelle no est un nombre variant entre 1 et 3 et le radical R est un radical alcoyle linéaire ou ramifié contenant de 1 à 4 atomes de carbone tel que par exemple un radical méthyle isopropyle, isobutyle et $M_1$ ayant la signification donnée précédemment. D'autres sulfonates peuvent être employés tels que les

N-acyl, N-alcoyltaurates de formule $R_2{-}CO{-}N(R_2'){-}CH_2{-}CH_2{-}SO_3Na$ où $R_2$ est un radical alcoyle ayant de 11 à 18 atomes de carbone et $R_2'$ est un radical méthyle, éthyle: comme par exemple le N-oléoyl, N-méthyltaurate ou le N-palmitoyl, N-méthyltaurate de sodium: les oléfines sulfonées résultant de la sulfonation des coupes d'oléfines linéaires de $C_{14}$ à $C_{18}$.

– les sulfates et les produits sulfatés: parmi les sulfates d'alcoyle répondant à la formule $R_3OSO_3$ $M_1$, on peut citer ceux où le radical $R_3$ est un radical lauryle, cétyle, myristyle et $M_1$ ayant la signification donnée précédemment: les huiles et graisses naturelles sulfatées; le sel disodique de l'acide oléique sulfaté; les alcools gras polyoxyéthylénés et sulfatés de formule $R_4{-}({-}O{-}CH_2{-}CH_2{-})_{n1}{-}OSO_3$ $M_1$ dans laquelle le radical $R_4$ est un radical alcoyle contenant de 6 à 16 atomes de carbone tel que par exemple un radical myristyle ou un radical alcoyle linéaire ou ramifié comme par exemple un radical hexyle, octyle, décyle, dodécyle, $n_1$ est le nombre de moles d'oxyde d'éthylène pouvant varier de 1 à 4 et $M_1$ ayant la signification donnée précédemment; les alcoylphénols polyoxyéthylénés et sulfatés de formule $R_5{-}C_6H_4{-}({-}O{-}CH_2{-}CH_2{-})_{n2}{-}OSO_3$ $M_1$ dans laquelle le radical $R_5$ est un radical alcoyle linéaire ou ramifié contenant de 8 à 13 atomes de carbone tel que par exemple un radical octyle, nonyle, dodécyle, $n_2$ est le nombre de moles d'oxyde d'éthylène pouvant varier de 1 à 6 et $M_1$ ayant la signification donnée précédemment.

– les phosphates alcalins: les mono- ou diesters de l'acide orthophosphorique ou l'un de ses sels qui peuvent être représentés pour les phosphates d'alcoyle par la formule $(R_6O)$ PO $(OM_2)_2$ et pour les phosphates de dialcoyle par la formule $(R_6O)_2$ PO $(OM_2)$ dans lesquelles le radical $R_6$ est un radical alcoyle linéaire ou ramifié contenant de 6 à 12 atomes de carbone et $M_2$ représente un atome d'hydrogène, de sodium ou de potassium. A titre d'exemples de radical $R_6$, on peut citer le n-hexyle, n-octyle, n-éthylhexyle, diméthylhexyle, n-décyle, diméthyloctyle, triméthylheptyle, triméthylnonyle; les mono- ou diesters de l'acide orthophosphorique ou l'un de ses sels, polyoxyéthylénés qui peuvent être représentés pour les phosphates d'alcoyle polyoxyéthylénés par la formule

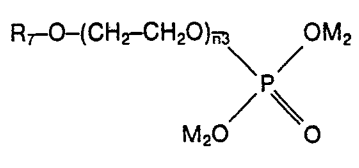

et pour les phosphates de dialcoyle polyoxyéthylénés par la formule

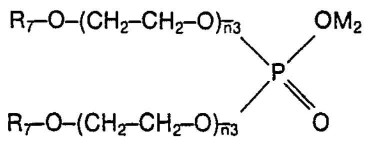

dans lesquelles le radical $R_7$ représente un radical alcoyle linéaire ou ramifié ayant de 6 à 12 atomes de carbone, un radical phényle, un radical alcoylphényle avec une chaîne alcoyle ayant de 8 à 12 atomes de carbone, $n_3$ est le nombre d'oxyde d'éthylène pouvant varier de 2 à 8 et $M_2$ ayant la signification donnée précédemment. Comme exemples de radical $R_7$, on peut nommer le radical hexyle, octyle, décyle, dodécyle, nonylphényle.

Comme agents tensio-actifs non ioniques, on peut faire appel d'une manière générale à des composés obtenus par condensation d'oxyde d'alcoylène avec un composé organique qui peut être aliphatique ou alcoylaromatique. Les tensio-actifs non ioniques appropriés sont:

– les alcoylphénols polyoxyéthylénés par exemple les produits de condensation d'oxyde d'éthylène à raison de 5 à 25 moles par mole d'alcoylphénol, le radical alcoyle étant droit ou ramifié et contenant de 6 à 12 atomes de carbone. On peut citer tout particulièrement le nonylphénol condensé avec environ 10 à 30 moles d'oxyde d'éthylène par mole de phénol, le dinonylphénol condensé avec 15 moles d'oxyde d'éthylène par mole de phénol, le dodécylphénol condensé avec 12 moles d'oxyde d'éthylène par mole de phénol.

– les alcools aliphatiques polyoxyéthylénés résultant de la condensation avec l'oxyde d'éthylène à raison de 5 à 30 moles d'oxyde d'éthylène, d'alcools gras linéaires ou ramifiés contenant de 8 à 22 atomes de carbone: par exemple le produit de condensation d'environ 15 moles d'oxyde d'éthylène avec 1 mole de tridécanol ou d'alcool de coprah: l'alcool myristylique condensé avec 10 moles d'oxyde d'éthylène.

– les amides gras tels que par exemple le diéthanolamide d'acides gras éventuellement polyoxyéthylénés comme l'acide laurique ou de l'huile de coco,

– les dérivés polyoxyéthylénés et polyoxypropylénés: une illustration de ce type de tensio-actifs sont les produits bien connus vendus sous le nom «PLURONICS». On les obtient par addition séquentielle d'oxyde de propylène puis d'oxyde d'éthylène sur un composé à hydrogène réactif de bas poids moléculaire tel que par exemple, le propylèneglycol.

Afin que le tensio-actif s'incorpore facilement aux compositions de l'invention, il est introduit sous forme solide, de préférence pulvérulente.

Les tensio-actifs se présentent sous forme solide et le plus couramment sous forme liquide. Dans le cas d'un tensio-actif liquide, il doit être déposé sur un support pulvérulent capable de l'adsorber et de le désorber, chimiquement inerte, insoluble ou soluble. On peut l'adsorber directement sur la poudre constituée par le matériau apportant l'eau éventuellement additionné d'eau.

D'une manière préférentielle on choisit un tensio-actif solide tel que les alcoylnaphtalènesulfonates de sodium en particulier le diisopropylnaphtalènesulfonate de sodium.

Il est à noter que le tensio-actif doit être choisi de telle sorte qu'il soit compatible avec la législation du traitement des eaux.

Les différents constituants des compositions de l'invention sont mis en œuvre dans les proportions suivantes:

La quantité d'eau présente dans lesdites compositions exprimée par le rapport pondéral (gomme/eau) peut varier dans de larges limites allant de 6,5 à 1, de préférence 2,5 à 1. La limite inférieure ne présente aucun caractère critique. Par contre, il est préférable que le rapport ne dépasse pas 4.

La quantité de matériau apportant l'eau est définie par le rapport pondéral (matériau apportant l'eau/eau) qui est de préférence compris entre 0,3 et 0,6 bien qu'il puisse être choisi dans une gamme plus large allant de 0,3 à 2,6.

La quantité de tensio-actif mise en jeu définie par le rapport entre le poids du tensio-actif et le poids total de la composition de l'invention peut varier entre 0 et 0,10. La limite supérieure n'a aucun caractère critique mais il n'y a aucun intérêt à atteindre des rapports pondéraux supérieurs à 0,25. Préférentiellement la quantité de tensio-actif est choisie de telle sorte que ledit rapport soit compris entre 0 et 0,07.

On donne, ci-après, des exemples de compositions à base de gomme selon l'invention:
- de 30 à 70% en poids de gomme hydrosoluble
- de 7 à 40% en poids d'un matériau apportant l'eau
- de 0 à 10% en poids d'un tensio-actif anionique et/ou non ionique
- de 15 à 37% en poids d'eau.

Les compositions préférées sont les suivantes et contiennent:
- de 50 à 60% en poids de gomme hydrosoluble
- de 8 à 15% en poids d'un matériau apportant l'eau
- de 0 à 7% en poids d'un tensio-actif anionique et/ou non ionique
- de 24 à 36% en poids d'eau.

Pour ce qui est de la préparation des compositions de l'invention, elle varie légèrement selon que l'eau de la composition est de l'eau amenée par rapport extérieur ou de l'eau de cristallisation et selon que le tensio-actif se trouve sous forme solide ou liquide.

Le procédé de préparation des compositions de l'invention consiste à mélanger à sec le matériau apportant l'eau sur lequel éventuellement, on a adsorbé de l'eau, avec la gomme et éventuellement à ajouter un tensio-actif anionique et/ou non ionique.

La première opération qui est l'imprégnation du matériau apportant l'eau, avec l'eau concerne les matériaux suivants: les silices fines précipitées, les gels de silice déshydratés, les hydrates d'alumine et les silicates d'aluminium hydratés. On ajoute progressivement, sous agitation, l'eau sur le matériau apportant l'eau. Elle n'est pas réalisée lorsque l'on choisit, à titre de matériaux apportant l'eau, les gels de silice hydratés, les hydrates de sels minéraux ou organiques.

Le matériau apportant l'eau est sous la forme d'une poudre sèche même lorsqu'il a subi une imprégnation à l'eau. On effectue ensuite son mélange avec la gomme dans un mélangeur à poudres de type connu: mélangeurs à chute libre du type tambour, mélangeurs verticaux ou horizontaux à vis hélicoïdale, mélangeurs horizontaux type Lödige etc...

L'introduction d'un tensio-actif dans la composition de l'invention se fait, lorsqu'il est solide, dans le mélange constitué par le matériau apportant l'eau et la gomme. Si le tensio-actif se présente sous forme liquide, il est généralement adsorbé sur le matériau apportant l'eau simultanément ou successivement à l'eau puis on effectue ensuite le mélange avec la gomme.

Une fois tous les composants introduits dans le mélangeur, on poursuit le mélange. La durée de l'opération est fonction de l'appareil utilisé et sera aisément déterminée par l'homme de métier de telle sorte qu'il obtienne un mélange homogène.

Le procédé décrit ci-dessus, conduit à l'obtention de compositions sous la forme d'une poudre ayant une excellente stabilité au stockage.

Ces compositions sont mises en œuvre à titre d'adjuvants de floculation dans le procédé défini ci-après.

Un autre objet de l'invention est donc, un nouveau procédé de floculation notamment pour la purification des eaux caractérisé par le fait que l'on traite une eau à pH compris entre 6 et 9 par un agent floculant à base d'un métal du groupe du fer et/ou de l'aluminium puis l'on ajoute l'adjuvant de floculation constitué par une composition telle que définie précédemment.

L'agent floculant peut être constitué par un agent floculant habituel, notamment à base de fer et/ou d'aluminium tel que sulfate, chlorure, hydroxychlorure d'aluminium, chlorure ou chlorosulfate ferrique.

On décrit ci-après, la mise en œuvre du procédé de l'invention.

On a constaté, qu'il est nécessaire d'introduire dans l'eau à traiter, d'abord l'agent floculant puis l'adjuvant de floculation comprenant la gomme hydrosoluble.

D'une manière préférentielle, l'ajout de la gomme s'effectue dans un délai variant, par exemple, de 1 à 5 minutes par rapport à la mise en œuvre de l'agent floculant.

On a également observé que la mise en contact entre l'eau à traiter et l'agent floculant, doit être rapide. C'est pourquoi, il est préférable de maintenir l'eau à traiter sous forte agitation réalisée par des dispositifs habituellement utilisés dans le domaine considéré tels que par exemple, un agitateur à turbine (cf. PERRY et CHILTON – 5ème édition 1973).

On procède aussi à l'adjonction de l'adjuvant de floculation, sous forte agitation, mais pendant un temps bref. Généralement, 1 à 2 minutes suffisent.

Ensuite, on maintient le milieu sous une agitation lente pendant par exemple de 15 à 30 minutes, puis on arrête l'agitation afin de permettre la décantation. Sans pour autant limiter l'invention, on donne des vitesses d'agitation utilisées dans les exemples.

Les agents floculants et les adjuvants de floculation peuvent être mis en œuvre sous forme de poudre mais il est préférable de les employer sous forme de solution.

Pour les agents floculants à base d'aluminium, on utilise habituellement des solutions de sulfate d'aluminium hydraté à 630 g/litre correspondant à 8% d'oxyde d'aluminium $Al_2O_3$ à raison d'environ 5 à 150 $cm^3$ par $m^3$ d'eau traitée; des solutions de chlorure d'aluminium à 700 g/l correspondant à 15% d'oxyde d'aluminium $Al_2O_3$ à raison, d'environ 10 à 100 $cm^3$ par $m^3$ d'eau traitée; des solutions d'hydroxychlorure d'aluminium à 10% d'oxyde d'aluminium à raison d'environ 10 à 100 $cm^3$ par $m^3$ d'eau traitée.

Pour les agents floculants à base de fer, on utilise des solutions de chlorure ferrique à 600 g/l ou de chlorosulfate ferrique à 685 g/l correspondant à 200 g/l de fer à raison, d'environ 15 à 60 $cm^3$ par $m^3$ d'eau traitée.

Les valeurs sont données à titre indicatif et seront adaptées par l'homme de métier en fonction de nombreux paramètres, notamment de la nature de l'eau et de sa température, l'agent floculant, de sa concentration dans la solution.

En ce qui concerne l'adjuvant de floculation, il s'utilise habituellement en solutions de 1 à 5 g/l. La confection desdites solutions est réalisée simplement par addition de l'adjuvant de floculation au milieu aqueux mis sous agitation, par des moyens classiques d'agitation (agitation à ancre, à hélice ou à turbine etc...).

Dans le procédé de floculation de l'invention on mettra en œuvre, une quantité d'adjuvant de floculation telle qu'il y ait de 0,05 à 1 g de gomme hydrosoluble par mètre-cube d'eau à traiter.

Comme déjà dit précédemment, le procédé selon l'invention, s'adapte au traitement des eaux et en particulier à celui des eaux potables qui exigent un degré de pureté plus important.

On se réfèrera maintenant pour donner une compréhension plus complète de l'invention aux exemples 1 à 38.

Avant de détailler les exemples, on précisera:
- les caractéristiques à déterminer sur les eaux à traiter;
- les caractéristiques de l'agent floculant;
- les caractéristiques et la préparation de l'adjuvant de floculation;
- les conditions de réalisation des essais qui restent identiques dans tous les essais.

1 – Caractéristiques des eaux à traiter

On précisera les caractéristiques suivantes de l'eau brute à traiter:
- température
- Turbidité NTU: la turbidité de l'eau est à l'inverse de sa transparence. Elle est déterminée selon la méthode décrite dans l'ouvrage J. RODIER, page 65. Elle est exprimée en unité Formazine.

2 – Caractéristiques des agents floculants

Dans les exemples, on utilise les solutions commercialisées de sulfate d'aluminium par la Société Rhône-Poulenc et de chlorosulfate ferrique sous la Marque déposée CLAIRTAN.
- sulfate d'aluminium: la solution utilisée contient 8,3% d'$Al_2O_3$. Sa densité est de 1,32–1,33
- chlorosulfate ferrique: le Clairtan est une solution aqueuse de chlorosulfate ferrique $FeSO_4Cl$ de couleur brun-rouge foncé. Sa composition est la suivante:

| | | |
|---|---|---|
| Fe: | 200 g/l | (soit 13%) |
| $SO_4^{--}$: | 360 g/l | (soit 23,4%) |
| $Cl^-$: | 120 g/l | (soit 7,8%) |

Sa densité est de 1,54 à 20 °C.

3 – Caractéristiques et préparation des adjuvants de floculation

On choisit les composés suivants:

a) comme gomme hydrosoluble
- alginate de sodium: produit commercialisé sous la marque Aqualgine qui est un alginate de sodium purifié extrait des algues marines du genre Laminaria
- gomme adragante: produit commercialisé par la Société Iranex.
- pectines de type (L.M.) commercialisées par Unipectine sous la référence 325 NH 95 ayant un pourcentage d'estérification de 26 à 36%,
- la gélatine de la Société Prolabo n° 24 350 262,
- la gomme Xanthane commercialisée par la Société Rhône Poulenc sous la dénomination commerciale Rhodopol 23, dont les spécifications sont les suivantes:

| | |
|---|---|
| Aspect | poudre couleur crème |
| Densité apparente g/$cm^3$ | 0,8 |
| Matière active | 90% |
| Cendres | 10% |
| Humidité | 10% |
| pH (sel à 1% dans l'eau distillée) | 7 |
| Viscosité BROOKFIELD LVT 30 M, aiguille n° 4 | 2200–3000 cps |

Dimensions de particules:

| | | |
|---|---|---|
| particules | <75! | <30% |
| | >297! | >2% |

- homopolymère du chlorure de méthacrylate d'éthyltriméthylammonium (Flocogil C 4) dénommé polymère C: haut polymère fortement cationique se présentant sous la forme d'une fine poudre blanche et préparé conformément au procédé décrit dans le brevet français 2 348 227
- copolymère d'acide acrylique et d'acrylamide (FLOCOGIL AD 37 – Marque commerciale – Société Rhône-Poulenc) dénommé polymère A: polymère moyennement anionique de poids moléculaire élevé 6–8 $10^6$ se présentant sous la forme d'une fine poudre blanche et obtenu selon le même procédé décrit dans le brevet précité.

b) comme matériau apportant l'eau
- une silice fine précipitée (TIXOSIL 38 A – Marque commerciale – Société Rhône-Poulenc) ayant une surface BET de 250 $m^2$/g et un volume poreux pour des pores variant entre 400 Å à 2,5! de 1,80 $cm^3$/g de silice et une humidité à 105 °C inférieure à 7%

– les hydrates des sels minéraux ou organiques suivants:
sulfate de sodium décahydraté: $Na_2SO_4$, $10H_2O$
acétate de sodium trihydraté: $NaC_2H_3O_2$, $3H_2O$
lactate de calcium pentahydraté: $Ca(C_3H_5O_3)_2$, $5H_2O$

c) comme tensio-actif

On a utilisé un tensio-actif anionique, sous forme solide le SUPRAGIL WP (Marque commerciale – Société Rhône-Poulenc) qui est un diisopropylnaphtalènesulfonate de sodium. Plus précisément, il répond à la formule $(C_3H_7)_{no}$ $C_{10}H_{7-no}$-$SO_3Na$ avec no = 1,8. On l'a employé pour des raisons de commodité de mise en œuvre du fait de son état solide mais on veillera à choisir un tensio-actif à qualité alimentaire dans le cas de traitement d'eaux potables.

On précisera dans chaque exemple, la proportion des constituants des compositions intervenant à titre d'adjuvants de floculation.

Pour ce qui est du mode de préparation de l'adjuvant de floculation lorsque celui-ci est une composition, il est le suivant:

– on fait adsorber l'eau, si nécessaire, au matériau apportant l'eau, dans le rapport choisi. Pour ce faire, dans un bécher contenant ledit matériau, on verse lentement l'eau sous agitation,
– on additionne la gomme hydrosoluble au matériau imprégné d'eau et on mélange,
– enfin, on ajoute le tensio-actif solide si nécessaire,
– on homogénéïse la composition pendant une durée d'une heure dans un mélangeur à poudres.

Il y a lieu de noter que l'étape d'imprégnation est supprimée lorsque l'on met en œuvre les hydrates de sels minéraux ou organiques.

Les conditions de préparation des solutions sont les suivantes:

– on a confectionné 100 g de solution,
– dans un bécher équipé d'un système d'agitation du type cadre tournant à la vitesse de 100 tours/minute, on introduit 100 g d'eau qui est de l'eau de ville ayant une dureté de 25°HT (soit 100 mg/l d'ions $Ca^{++}$),
– on verse rapidement l'adjuvant de floculation en poudre en quantité voulue: la durée d'addition étant inférieure à 30 secondes,
– on maintient l'agitation jusqu'à obtention d'un mélange homogène.

4 – Conditions de réalisation des essais

L'adjuvant de floculation ainsi préparé est mis en œuvre conjointement avec l'agent floculant dans une série d'essais conduits de la manière qui suit. On réalise les essais comparatifs d'une manière identique.

Les essais sont effectués en JAR-TEST selon la méthode décrite dans l'ouvrage: la décantation de Degremont – mémento Technique de l'eau 1972 – (Degremont, page 932).

L'eau à traiter sera définie dans chaque essai.

Les agents floculants sont ajoutés sous agitation rapide (120 tours/mn) que l'on maintient 1 minute, plus une autre minute pour les adjuvants de floculation, l'agitation est ensuite diminuée jusqu'à 40 tours/mn pendant 20 minutes.

Les agitateurs sont relevés et on laisse décanter 20 minutes.

Lors de la floculation, on note la grosseur du floc selon la cotation suivante (référence Degremont):

. 0 pas de floc
. 2 floc à peine visible
. 6 floc de dimension moyenne
. 8 bon floc
. 10 très bon floc.

Lors de la décantation on note sa vitesse et on détermine sur le surnageant, la turbidité.

Dans tous les essais réalisés en mettant en œuvre la gomme hydrosoluble sous la forme des compositions de l'invention, on note une amélioration de la mise en dispersion et de la dissolution de la gomme. En plus de cet avantage très important d'un point de vue industriel, on constate le plus souvent une amélioration de la vitesse de floculation, de la décantation et des résultats de turbidité obtenus.

EXEMPLES 1 à 4

Essais A à D

Les exemples 1 à 4 illustrent l'emploi de sulfate d'aluminium comme agent floculant et de compositions comme adjuvant de floculation contenant:

| | |
|---|---|
| – une gomme hydrosoluble: | Gomme Xanthane<br>alginate de sodium<br>polymère A |
| – un matériau apportant l'eau: | une silice précipitée |
| – un tensio-actif anionique: | diisopropylnaphtalènesulfonate de sodium (D.N.S.S.) |
| – de l'eau. | |

Les essais A à D sont des essais témoins dans lesquels l'agent floculant est identique et l'adjuvant de floculation n'est constitué que par la gomme hydrosoluble.

Les résultats sont consignés dans le tableau I.

La mise en œuvre des gommes sous la forme des compositions de l'invention facilitent énormément la dispersion et la dissolution de la gomme. De plus, elles apportent les avantages suivants:

– la floculation est légèrement plus rapide dans le cas de la Gomme Xanthane
– la floculation est meilleure dans le cas de l'alginate de sodium
– la turbidité est meilleure dans le cas du polymère A et les résultats obtenus sont excellents avec de très faibles quantités de polymère A.

EXEMPLES 5 à 10

Essais E à G

Les exemples 5, 7, 9 et essais E, F et G sont identiques aux précédents à la différence près des doses utilisées.

Par contre dans les exemples 6, 8, 10 on a mis en œuvre dans les compositions de l'invention, un

TABLEAU I

Traitement d'une eau brute ayant une température de 12 °C et une turbidité de 5

| Exemples | Agent floculant Nature | cm³/m³ | Adjuvant de floculation Nature | | g/m³ | Taille du floc 5 mn | Taille du floc 10 mn | Decantation | Turbidité NTU |
|---|---|---|---|---|---|---|---|---|---|
| A | Sulfate d'aluminium | 50 | Gomme Xanthane | | 0,5 | $<6$ | $>6$ | Bonne | 0,9 |
| 1 | Sulfate d'aluminium | 50 | Gom. Xanthane<br>silice<br>D.N.S.S.<br>eau | = 60<br>= 11,65<br>= 5<br>= 23,35 | 0,5 | $\simeq 6$ | $>6$ | Bonne | 1 |
| B | Sulfate d'aluminium | 50 | Alginate de sodium | | 0,5 | 6 | $>6$ | Bonne | 1,2 |
| 2 | Sulfate d'aluminium | 50 | Alginate de sodium<br>silice<br>D.N.S.S.<br>eau | = 60<br>= 8,75<br>= 5<br>= 26,25 | 0,5 | $\simeq 6$ | $>6$ | Bonne | 1,2 |
| C | Sulfate d'aluminium | 50 | Polymère A | | 0,5 | 8 | 8 | Très bonne | 1,2 |
| 3 | Sulfate d'aluminium | 50 | Polymère A<br>silice<br>D.N.S.S.<br>eau | = 60<br>= 11,65<br>= 5<br>= 23,35 | 0,5 | 8 | 8 | Très bonne | 0,8 |
| D | Sulfate d'aluminium | 50 | Polymère A | | 0,2 | $\simeq 8$ | $\simeq 8$ | Très bonne | 0,65 |
| 4 | Sulfate d'aluminium | 50 | Polymère A<br>silice<br>D.N.S.S.<br>eau | = 60<br>= 11,65<br>= 5<br>= 23,35 | 0,2 | $\simeq 8$ | $\simeq 8$ | Très bonne | 0,45 |

autre matériau apportant l'eau, à savoir le sulfate de sodium décahydraté.

On a rassemblé tous les résultats dans le tableau II.

En plus des avantages au niveau de la mise en œuvre des compositions de l'invention, on note au début une accélération de la floculation, une amélioration de la décantation et de la turbidité. Il ressort du tableau que les résultats sont légèrement inférieurs lorsque l'on remplace la silice par le sel hydraté dans les compositions de l'invention, mais toujours supérieurs aux essais témoins.

EXEMPLES 11 à 16

Essais H à J

Dans ces exemples et essais, on a changé la nature de l'agent floculant qui est le chlorosulfate ferrique.

On consigne les résultats obtenus dans le tableau III.

TABLEAU II

Traitement d'une eau brute ayant une température de 15 °C et une turbidité de 6,2

| Exemples | Agent floculant Nature | cm³/m³ | Adjuvant de floculation Nature | | g/m³ | Taille du floc 5 mn | Taille du floc 10 mn | Decantation | Turbidité NTU |
|---|---|---|---|---|---|---|---|---|---|
| E | Sulfate d'aluminium | 50 | Gomme Xanthane | | 0,42 | $<6$ | $\geqslant 6$ | Assez bonne | 0,9 |
| 5 | Sulfate d'aluminium | 50 | Gom. Xanthane<br>silice<br>D.N.S.S.<br>eau | = 60<br>= 11,65<br>= 5<br>= 23,35 | 0,42 | $>6$ | $>6$ | Bonne | 0,65 |
| 6 | Sulfate d'aluminium | 50 | Gom. Xanthane<br>$Na_2SO_4,10H_2O$<br>D.N.S.S.<br>eau | = 60<br>= 11,65<br>= 5<br>= 23,35 | 0,42 | $>6$ | $>6$ | Bonne | 0,75 |
| F | Sulfate d'aluminium | 50 | Alginate de sodium | | 0,42 | $<6$ | $\geqslant 6$ | Assez bonne | 0,85 |
| 7 | Sulfate d'aluminium | 50 | Alginate de sodium<br>silice<br>D.N.S.S.<br>eau | = 60<br>= 8,75<br>= 5<br>= 26,25 | 0,42 | $>6$ | $>6$ | Bonne | 0,75 |

TABLEAU II (Suite)
Traitement d'une eau brute ayant une température de 15 °C et une turbidité de 6,2

| Exemples | Agent floculant Nature | $cm^3/m^3$ | Adjuvant de floculation Nature | | $g/m^3$ | Taille du floc 5 mn | Taille du floc 10 mn | Decantation | Turbidité NTU |
|---|---|---|---|---|---|---|---|---|---|
| 8 | Sulfate d'aluminium | 50 | Alginate de sodium<br>$Na_2SO_4,10H_2O$<br>D.N.S.S.<br>eau | =60<br>= 8,75<br>= 5<br>=26,25 | 0,42 | ⩾6 | ⩾6 | Bonne | 0,80 |
| G | Sulfate d'aluminium | 50 | Polymère A | | 0,18 | >6 | ⩽8 | Bonne | 0,9 |
| 9 | Sulfate d'aluminium | 50 | Polymère A<br>silice<br>D.N.S.S.<br>eau | =60<br>=11,65<br>= 5<br>=23,35 | 0,18 | <8 | <8 | Très bonne | 0,60 |
| 10 | Sulfate d'aluminium | 50 | Polymère A<br>$Na_2SO_4,10H_2O$<br>D.N.S.S.<br>eau | =60<br>=11,65<br>= 5<br>=23,35 | 0,18 | ≃6 | 6 | Bonne | 0,80 |

TABLEAU III
Traitement d'une eau brute ayant une température de 15 °C et une turbidité de 6,2

| Exemples | Agent floculant Nature | $cm^3/m^3$ | Adjuvant de floculation Nature | | $g/m^3$ | Taille du floc 5 mn | Taille du floc 10 mn | Decantation | Turbidité NTU 20 mn | Turbidité NTU 120 mn |
|---|---|---|---|---|---|---|---|---|---|---|
| H | Chlorosulfate ferrique | 30 | Gomme Xanthane | | 0,5 | >6 | >6 | Bonne | 1,0 | |
| 11 | Chlorosulfate ferrique | 30 | Gom. Xanthane<br>silice<br>D.N.S.S.<br>eau | =60<br>=11,65<br>= 5<br>=23,35 | 0,42 | >6 | >6 | Bonne | 1,6 | 1,0 |
| 12 | Chlorosulfate ferrique | | Gom. Xanthane<br>$Na_2SO_4,10H_2O$<br>D.N.S.S.<br>eau | =60<br>=11,65<br>= 5<br>=23,35 | 0,42 | >6 | >6 | Bonne | 1,7 | 1,1 |
| I | Chlorosulfate ferrique | 30 | Alginate de sodium | | 0,5 | ⩾6 | >6 | Assez bonne | 1,3 | |
| 13 | Chlorosulfate ferrique | 30 | Alginate de sodium<br>silice<br>D.N.S.S.<br>eau | =60<br>= 8,75<br>= 5<br>=26,25 | 0,42 | >6 | >6 | Bonne | 1,8 | 1,0 |
| 14 | Chlorosulfate ferrique | 30 | Alginate de sodium<br>$Na_2SO_4,10H_2O$<br>D.N.S.S.<br>eau | =60<br>= 8,75<br>= 5<br>=26,25 | 0,42 | >6 | >6 | Bonne | 2,0 | 1,0 |
| J | Chlorosulfate ferrique | 30 | Polymère A | | 0,20 | 8 | 8 | Bonne | 1,5 | 0,9 |
| 15 | Chlorosulfate ferrique | 30 | Polymère A<br>silice<br>D.N.S.S.<br>eau | =60<br>=11,65<br>= 5<br>=23,35 | 0,18 | ≃8 | ≃8 | Bonne | 1,6 | 0,9 |
| 16 | Chlorosulfate ferrique | 30 | Polymère A<br>$Na_2SO_4,10H_2O$<br>D.N.S.S.<br>eau | =60<br>=11,65<br>= 5<br>=23,35 | 0,18 | >6 | >6 | Bonne | 1,7 | 1,0 |

Pour des résultats identiques en floculation et en décantation, on peut mettre en œuvre des quantités moindres de gommes hydrosolubles lorsqu'elles sont sous la forme des compositions de l'invention.

EXEMPLES 17 à 20
Essais K à N

Les exemples suivants illustrent la mise en œuvre de compositions contenant d'autres gommes naturelles: gomme adragante, pectine (L.M.) et gélatine ainsi qu'une autre gomme synthétique: polymère C.

L'agent floculant est le sulfate d'aluminium.

Les résultats sont consignés dans les tableaux IV et V.

TABLEAU IV
Traitement d'une eau brute ayant une température de 14 °C et une turbidité de 8,4

| Exemples | Agent floculant Nature | cm³/m³ | Adjuvant de floculation Nature | g/m³ | Taille du floc 5 mn | 10 mn | Decantation | Turbidité NTU |
|---|---|---|---|---|---|---|---|---|
| K | Sulfate d'aluminium | 50 | Gomme adragante | 5 | >6 | ≃8 | Bonne | 0,55 |
| 17 | Sulfate d'aluminium | 50 | Gom. adragante = 60<br>silice = 11,65<br>D.N.S.S. = 5<br>eau = 23,35 | 5 | >6 | ≃8 | Bonne | 0,53 |
| L | Sulfate d'aluminium | 50 | Pectine (L.M.) | 2 | 6 | >6 | Assez bonne | 1 |
| 18 | Sulfate d'aluminium | 50 | Pectine (L.M.) = 60<br>silice = 11,65<br>D.N.S.S. = 5<br>eau = 23,35 | 2 | ⩾6 | >6 | Assez bonne | 1 |
| M | Sulfate d'aluminium | 50 | Polymère C | 0,5 | ⩾6 | >6 | Moyenne | 1,4 |
| 19 | Sulfate d'aluminium | 50 | Polymère C = 60<br>silice = 11,65<br>D.N.S.S. = 5<br>eau = 23,35 | 0,5 | >6 | ≃8 | Moyenne | 1,4 |

TABLEAU V
Traitement d'une eau brute ayant une température de 19 °C et une turbidité de 5

| Exemples | Agent floculant Nature | cm³/m³ | Adjuvant de floculation Nature | g/m³ | Taille du floc 5 mn | 10 mn | Decantation | Turbidité NTU |
|---|---|---|---|---|---|---|---|---|
| N | Sulfate d'aluminium | 50 | Gélatine | 2 | ⩽6 | 6 | Assez bonne | 1,3 |
| 20 | Sulfate d'aluminium | 50 | Gélatine = 60<br>silice = 11,65<br>D.N.S.S. = 5<br>eau = 23,35 | 2 | 6 | >6 | Assez bonne | 1,1 |

Les compositions contenant la pectine permettent d'obtenir une meilleure floculation au départ. On note une meilleure floculation dans le cas de celles renfermant le polymère C et la gélatine. Pour cette dernière, on constate également une amélioration de la turbidité.

EXEMPLES 21 à 26

Dans la série d'exemples qui suivent, on fait varier la quantité de la gomme hydrosoluble à savoir la Gomme Xanthane intervenant dans les différentes compositions à titre d'adjuvant de floculation. L'agent floculant est le sulfate d'aluminium.

On obtient les résultats suivants qui sont rassemblés dans le tableau VI.

TABLEAU VI

Traitement d'une eau brute ayant une température de 20 °C et une turbidité de 7,2

| Exemples | Agent floculant Nature | $cm^3/m^3$ | Adjuvant de floculation Nature | | $g/m^3$ | Taille du floc 5 mn | 10 mn | Decantation | Turbidité NTU |
|---|---|---|---|---|---|---|---|---|---|
| 21 | Sulfate d'aluminium | 50 | Gom. Xanthane<br>silice<br>D.N.S.S.<br>eau | = 40<br>= 18,35<br>= 5<br>= 36,65 | 0,5 | ⩾6 | >6 | Bonne | 0,70 |
| 22 | Sulfate d'aluminium | 50 | Gom. Xanthane<br>silice<br>D.N.S.S.<br>eau | = 50<br>= 11,25<br>= 5<br>= 33,75 | 0,5 | <6 | 6 | Assez bonne légère suspension | 1,1 |
| 23 | Sulfate d'aluminium | 50 | Gom. Xanthane<br>silice<br>D.N.S.S.<br>eau | = 50<br>= 15<br>= 5<br>= 30 | 0,5 | ⩾6 | >6 | Bonne | 0,70 |
| 24 | Sulfate d'aluminium | 50 | Gom. Xanthane<br>silice<br>D.N.S.S.<br>eau | = 60<br>= 8,75<br>= 5<br>= 26,25 | 0,5 | ⩾6 | >6 | Bonne | 0,75 |
| 25 | Sulfate d'aluminium | 50 | Gom. Xanthane<br>silice<br>D.N.S.S.<br>eau | = 60<br>= 11,65<br>= 5<br>= 23,35 | 0,5 | ⩾6 | >6 | Bonne | 0,65 |
| 26 | Sulfate d'aluminium | 50 | Gom. Xanthane<br>silice<br>D.N.S.S.<br>eau | = 70<br>= 8,35<br>= 5<br>= 16,65 | 0,5 | ⩾6 | >6 | Bonne | 0,70 |

Il ressort de l'analyse de ce tableau que l'on obtient des résultats semblables en floculation, décantation et turbidité avec des compositions contenant des quantités moindres de Gomme Xanthane.

EXEMPLES 27 à 32

Par rapport à la série d'exemples précédents, on a remplacé le sulfate d'aluminium par du chlorosulfate ferrique.

Les résultats sont consignés dans le tableau VII.

TABLEAU VII

Traitement d'une eau brute ayant une température de 20 °C et une turbidité de 7,2

| Exemples | Agent floculant Nature | $cm^3/m^3$ | Adjuvant de floculation Nature | | $g/m^3$ | Taille du floc 5 mn | 10 mn | Decantation | Turbidité NTU |
|---|---|---|---|---|---|---|---|---|---|
| 27 | Chlorosulfate ferrique | 30 | Gom. Xanthane<br>silice<br>D.N.S.S.<br>eau | = 40<br>= 18,35<br>= 5<br>= 36,65 | 30 | ≃8 | ≃8 | Bonne | 1,2 |
| 28 | Chlorosulfate ferrique | 30 | Gom. Xanthane<br>silice<br>D.N.S.S.<br>eau | = 50<br>= 11,25<br>= 5<br>= 33,75 | 30 | ≃8 | ≃8 | Bonne Légère suspension | 1,9 |
| 29 | Chlorosulfate ferrique | 30 | Gom. Xanthane<br>silice<br>D.N.S.S.<br>eau | = 50<br>= 15<br>= 5<br>= 30 | 30 | ≃8 | ≃8 | Bonne | 1,1 |
| 30 | Chlorosulfate ferrique | 30 | Gom. Xanthane<br>silice<br>D.N.S.S.<br>eau | = 60<br>= 8,75<br>= 5<br>= 26,25 | 30 | ≃8 | ≃8 | Bonne | 1,3 |
| 31 | Chlorosulfate ferrique | 30 | Gom. Xanthane<br>silice<br>D.N.S.S.<br>eau | = 60<br>= 11,65<br>= 5<br>= 23,35 | 30 | ≃8 | ≃8 | Bonne | 1,2 |

TABLEAU VII (Suite)
Traitement d'une eau brute ayant une température de 20 °C et une turbidité de 7,2

| Exemples | Agent floculant Nature | cm³/m³ | Adjuvant de floculation Nature | g/m³ | Taille du floc 5 mn | 10 mn | Decantation | Turbidité NTU |
|---|---|---|---|---|---|---|---|---|
| 32 | Chlorosulfate ferrique | 30 | Gom. Xanthane = 70<br>silice = 8,35<br>D.N.S.S. = 5<br>eau = 16,65 | 30 | ≃8 | ≃8 | Bonne | 1,2 |

On remarque que l'on n'a pas intérêt à mettre en œuvre de grandes quantités de Gomme Xanthane dans les compositions utilisées comme adjuvant de floculation.

EXEMPLES 33 à 36
Essais O à P

Dans les 2 séries d'exemples qui suivent, on met en œuvre deux agents floculants sulfate d'aluminium et chlorosulfate ferrique associés à des adjuvants de floculation constitués par une gomme synthétique, le polymère A et à titre de matériaux apportant l'eau, un sel hydraté organique: acétate de sodium trihydraté ou lactate de calcium pentahydraté.

On réalise deux essais témoins dans lesquels l'adjuvant de floculation n'est constitué que par la gomme synthétique.

On groupe les résultats dans le tableau VIII.

TABLEAU VIII
Traitement d'une eau brute ayant une température de 20 °C et une turbidité de 7,2

| Exemples | Agent floculant Nature | cm³/m³ | Adjuvant de floculation Nature | g/m³ | Taille du floc 5 mn | 10 mn | Decantation | Turbidité NTU |
|---|---|---|---|---|---|---|---|---|
| O | Sulfate d'aluminium | 50 | Polymère A | 0,1 | ⩾6 | >6 | Bonne Légère suspension | 0,9 |
| 33 | Sulfate d'aluminium | 50 | Polymère A = 60<br>$NaC_2H_3O_2$, $3H_2O$ = 40 | 0,1 | >6 | >6 | Bonne Légère suspension | 0,85 |
| 34 | Sulfate d'aluminium | 50 | Polymère A = 60<br>$Ca(C_3H_5O_3)_2$, $5H_2O$ = 40 | 0,1 | >6 | >6 | Bonne | 0,70 |
| P | Chlorosulfate ferrique | 25 | Polymère A | 0,1 | ⩾6 | >6 | Assez bonne | 1,8 |
| 35 | Chlorosulfate ferrique | 25 | Polymère A = 60<br>$NaC_2H_3O_2$, $3H_2O$ = 40 | 0,1 | ⩾6 | >6 | Assez bonne | 1,7 |
| 36 | Chlorosulfate ferrique | 25 | Polymère A = 60<br>$Ca(C_3H_5O_3)_2$, $5H_2O$ = 40 | 0,1 | ⩾6 | >6 | Bonne | 1,5 |

Dans les exemples de l'invention, la turbidité est améliorée.

EXEMPLES 37 et 38

Les deux exemples, ci-après, illustrent la mise en œuvre d'adjuvants de floculation constitués par la Gomme Xanthane associée à l'acétate de sodium trihydraté et au lactate de calcium pentahydraté: l'agent floculant étant le chlorosulfate ferrique.

Les résultats sont consignés dans le tableau IX.

TABLEAU IX
Traitement d'une eau brute ayant une température de 20 °C et une turbidité de 7,2

| Exemples | Agent floculant Nature | cm³/m³ | Adjuvant de floculation Nature | g/m³ | Taille du floc 5 mn | 10 mn | Decantation | Turbidité NTU |
|---|---|---|---|---|---|---|---|---|
| 37 | Chlorosulfate ferrique | 25 | Gom. Xanthane = 60<br>$NaC_2H_3O_2$, $3H_2O$ = 40 | 0,3 | >6 | <8 | Bonne | 1,2 |
| 38 | Chlorosulfate ferrique | 25 | Gom. Xanthane = 60<br>$Ca(C_3H_5O_3)_2$, $5H_2O$ = 40 | 0,3 | >6 | <8 | Bonne | 1,1 |

## Revendications

1. Utilisation comme adjuvant de floculation d'une composition en poudre contenant une gomme hydrosoluble, un dispersant solide et de l'eau, caractérisé par le fait qu'il est préparé par mélange à sec de la gomme hydrosoluble et d'un matériau apportant l'eau qui peut être soit de l'eau liée ou d'adsorption, soit de l'eau de cristallisation, la quantité d'eau étant telle que le rapport pondéral gomme/eau varie de 6,5 à 1 et la quantité de matériau apportant l'eau étant telle que le rapport pondéral matériau apportant l'eau/eau varie de 0,3 à 2,6.

2. Utilisation selon la revendication 1, caractérisé par le fait que la gomme hydrosoluble est une gomme naturelle, une biogomme, une gomme synthétique ou leurs mélanges.

3. Utilisation selon l'une des revendications 1 et 2, caractérisé par le fait que la gomme hydrosoluble est une biogomme obtenue par fermentation d'un hydrate de carbone sous l'action de bactéries du genre Xanthomonas, Arthrobacter ou de champignons du genre Sclerotium.

4. Utilisation selon l'une des revendications 1 à 3, caractérisé par le fait que la gomme hydrosoluble est une biogomme obtenue par fermentation d'un hydrate de carbone sous l'action de bactéries du genre Xanthomonas Campestris.

5. Utilisation selon l'une des revendications 1 à 4, caractérisé par le fait que la gomme hydrosoluble est une gomme naturelle telle que: agar-agar, alginates, carraghénates, gomme arabique, gomme adragante, gomme de caroube, de guar, pectine ou gélatine.

6. Utilisation selon l'une des revendications 1 à 5, caractérisé par le fait que la gomme hydrosoluble est un alginate de sodium, la gomme adragante, la pectine ou la gélatine.

7. Utilisation selon l'une des revendications 1 à 6, caractérisé par le fait que la gomme hydrosoluble est une gomme synthétique telle que: les acides polyacryliques et polyméthacryliques, leurs sels ou leurs esters; les polyacrylamides et les polyméthacrylamides ainsi que les dérivés de ces polymères.

8. Utilisation selon l'une des revendications 1 à 7, caractérisé par le fait que la gomme hydrosoluble est une gomme synthétique obtenue par polymérisation ou copolymérisation des monomères suivants: acrylamide, méthacrylamide, acides acryliques, et méthacryliques leurs sels et esters, acrylates et méthacrylates d'aminoalcoyle éventuellement quaternisés.

9. Utilisation selon l'une des revendications 1 à 8, caractérisé par le fait que le matériau apportant l'eau est une silice fine précipitée, un gel de silice hydraté, un gel de silice déshydraté, un hydrate d'alumine sous forme naturelle ou synthétique, une argile, une zéolithe naturelle ou synthétique, un hydrate de sels minéraux ou organiques.

10. Utilisation selon l'une des revendications 1 à 9, caractérisé par le fait que le matériau apportant l'eau est un hydrate des sels suivants mis en œuvre seuls, en mélange ou sous forme de combinaisons: les carbonates, les halogénures, les nitrates, les phosphates, les silicates, les sulfates ainsi que les acétates, les citrates, les lactates, les laurates, les tartrates des sels de sodium, potassium, calcium, magnésium.

11. Utilisation selon l'une des revendications 1 à 10, caractérisé par le fait que le matériau apportant l'eau est une silice fine précipitée ayant une surface BET de 200 à 400 $m^2/g$ et un diamètre de particules variant de 200 à 800 Å, un acétate de sodium trihydraté, un lactate de calcium pentahydraté.

12. Utilisation selon l'une des revendications 1 à 11, caractérisé par le fait que la composition comprend en outre un tensio-actif anionique et/ou non ionique.

13. Utilisation selon l'une des revendications 1 à 12, caractérisé par le fait que le tensio-actif est un tensio-actif anionique comme les savons de métaux alcalins, les sulfonates alcalins, les sulfates et produits sulfatés, les phosphates alcalins et/ou un tensio-actif non ionique comme les alcoylphénols polyoxyéthylénés, les alcools aliphatiques polyoxyéthylénés, les amides gras, les dérivés polyoxyéthylénés et polyoxypropylénés.

14. Utilisation selon l'une des revendications 1 à 13, caractérisé par le fait que le tensio-actif est un diisopropylnaphtalènesulfonate de sodium.

15. Utilisation selon l'une des revendications 1 à 14, caractérisé par le fait que la quantité d'eau dans la composition est telle que le rapport pondéral (gomme/eau) varie de 2,5 à 1.

16. Utilisation selon l'une des revendications 1 à 15, caractérisé par le fait que la quantité de matériau apportant l'eau est telle que le rapport pondéral (matériau apportant l'eau/eau) varie de 0,3 à 0,6.

17. Utilisation selon l'une des revendications 1 à 16, caractérisé par le fait que la quantité de tensio-actif est telle que le rapport entre le poids de tensio-actif et le poids total de la composition varie entre 0 et 0,10 de préférence entre 0 et 0,07.

18. Utilisation selon l'une des revendications 1 à 17, caractérisé par le fait que la composition comprend:
- de 30 à 70% en poids de gomme hydrosoluble
- de 7 à 40% en poids de matériau apportant l'eau
- de 0 à 10% en poids de tensio-actif anionique et/ou non ionique
- de 15 à 37% en poids d'eau.

19. Utilisation selon la revendication 18, caractérisé par le fait que la composition comprend:
- de 50 à 60% en poids de gomme hydrosoluble
- de 8 à 15% en poids d'un matériau apportant l'eau
- de 0 à 7% en poids d'un tensio-actif anionique et/ou non ionique
- de 24 à 36% en poids d'eau.

20. Procédé de floculation notamment pour le traitement des eaux, caractérisé par le fait que l'on traite une eau à pH compris entre 6 et 9 par un agent floculant à base d'un métal du groupe fer et/ou de l'aluminium puis l'on ajoute l'adjuvant de

floculation tel que défini dans l'une des revendications 1 à 19.

21. Procédé selon la revendication 20, caractérisé par le fait que l'agent floculant est un sulfate, chlorure, hydroxychlorure d'aluminium, chlorure ou chlorosulfate ferrique.

**Claims**

1. Use as a flocculation adjuvant of a powdered composition containing a water-soluble gum, a solid dispersant and water, characterized in that it is prepared by the dry mixing of the water-soluble gum and a material which provides water, which can be either bound or adsorbed water or water of crystallization, the amount of water being such that the ratio by weight gum/water varies from 6.5 to 1 and the amount of material which provides water being such that the ration by weight material which provides water/water varies from 0.3 to 2.6.

2. Use according to Claim 1, characterized in that the water-soluble gum is a natural gum, a biogum, a synthetic gum or mixtures thereof.

3. Use according to one of Claims 1 and 2, characterized in that the water-soluble gum is a biogum obtained by the fermentation of a carbohydrate under the action of bacteria of the genus Xanthomonas or Arthrobacter, or fungi of the genus Sclerotium.

4. Use according to one of Claims 1 to 3, characterized in that the water-soluble gum is a biogum obtained by fermentation of a carbohydrate under the action of bacteria of the genus Xanthomonas campestris.

5. Use according to one of Claims 1 to 4, characterized in that the water-soluble gum is a natural gum such as agar-agar, alginates, carragheenates, gum arabic, gum tragacanth, carob gum, guar gum, pectin or gelatin.

6. Use according to one of Claims 1 to 5, characterized in that the water-soluble gum is a sodium alginate, gum tragacanth, pectic or gelatin.

7. Use according to one of Claims 1 to 6, characterized in that the water-soluble gum is a synthetic gum such as polyacrylic and polymethacrylic acids, their salts or their esters, or polyacrylamides and polymethacrylamides, as well as the derivatives of these polymers.

8. Use according to one of Claims 1 to 7, characterized in that the water-soluble gum is a synthetic gum obtained by polymerization or copolymerization of the following monomers: acrylamide, methacrylamide, acrylic and methacrylic acids and their salts and esters, and optionally quaternized aminoalkyl acrylates and methacrylates.

9. Use according to one of Claims 1 to 8, characterized in that the material which provides water is a precipitated highly disperse silica, a hydrated silica gel, a dehydrated silica gel, a hydrated alumina in natural or synthetic form, a clay, a natural or synthetic zeolite, or a hydrate of inorganic or organic salts.

10. Use according to one of Claims 1 to 9, characterized in that the material which provides water is a hydrate of the following salts, which are used alone, mixed or in the form of combinations: the carbonates, halides, nitrates, phosphates, silicates and sulphates as well as the acetates, citrates, lactates, laurates and tartrates which are salts of sodium, potassium, calcium and magnesium.

11. Use according to one of Claims 1 to 10, characterized in that the material which provides water is a precipitated highly disperse silica having a BET surface area of 200 to 400 $m^2/g$ and a particle diameter varying from 200 to 800 Å, a sodium acetate trihydrate or a calcium lactate pentahydrate.

12. Use according to one of Claims 1 to 11, characterized in that the composition contains, in addition, an anionic and/or nonionic surfactant.

13. Use according to one of Claims 1 to 12, characterized in that the surfactant is an anionic surfactant such as alkali metal soaps, alkali metal sulphonates, sulphates and sulphated products and alkali metal phosphates, and/or nonionic surfactant such as polyoxyethylenated alkylphenols, polyoxyethylenated aliphatic alcohols, fatty amides, and polyoxyethylenated and polyoxypropylenated derivatives.

14. Use according to one of Claims 1 to 13, characterized in that the surfactant is a sodium diisopropylnaphthalenesulphonate.

15. Use according to one of Claims 1 to 14, characterized in that the amount of water in the composition is such that the ratio by weight (gum/water) varies from 2.5 to 1.

16. Use according to one of Claims 1 to 15, characterized in that the amount of material which provides water is such that the ratio by weight (material which provides water/water) varies from 0.3 to 0.6.

17. Use according to one of Claims 1 to 16, characterized in that the amount of surfactant is such that the ratio between the weight of surfactant and the total weight of the composition varies between 0 and 0.10, and preferably between 0 and 0.07.

18. Use according to one of Claims 1 to 17, characterized in that the composition comprises;
from 30 to 70% by weight of water-soluble gum
from 7 to 40% by weight of material which provides water
from 0 to 10% by weight of anionic and/or nonionic surfactant
from 15 to 37% by weight of water.

19. Use according to Claim 18, characterized in that the composition comprises:
from 50 to 60% by weight of water-soluble gum
from 8 to 15% by weight of a material which provides water
from 0 to 7% by weight of an anionic and/or nonionic surfactant
from 24 to 36% by weight of water.

20. Flocculation process, in particular for water

treatment, characterized in that a water having a pH between 6 and 9 is treated with a flocculating agent based on a metal of the iron group and/or aluminium, and the flocculation adjuvant as defined in one of Claims 1 to 19 is then added.

21. Process according to Claim 20, characterized in that the flocculating agent is an aluminium sulphate, chloride of hydroxychloride, or ferric chloride or chlorosulphate.

**Patentansprüche**

1. Verwendung einer Pulvermasse, die einen wasserlöslichen Gummi, ein festes Dispergiermittel sowie Wasser enthält, als Flockungszusatz, dadurch gekennzeichnet, dass er hergestellt worden ist durch Trockenvermischen des wasserlöslichen Gummis mit einem Material, das Wasser in Form von gebundenem Wasser, Adsorptionswasser oder Kristallwasser liefert, die Menge Wasser einem Gewichtsverhältnis von Gummi/Wasser von 6,5 bis 1 entspricht und die Menge des wasserliefernden Materials einem Gewichtsverhältnis von wasserlieferndem Material/Wasser von 0,3 bis 2,6 entspricht.

2. Verwendung nach Anspruch 1, dadurch gekennzeichnet, dass der wasserlösliche Gummi ein Pflanzengummi, ein Biogummi, ein synthetischer Gummi oder deren Gemische ist.

3. Verwendung nach einem der Ansprüche 1 und 2, dadurch gekennzeichnet, dass der wasserlösliche Gummi ein durch Fermentation eines Kohlenhydrats unter der Einwirkung von Bakterien der Art Xanthomonas, Arthrobacter oder von Pilzen der Art Sclerotium erhaltener Biogummi ist.

4. Verwendung nach einem der Ansprüche 1 bis 3, dadurch gekennzeichnet, dass der wasserlösliche Gummi ein durch Fermentation eines Kohlenhydrats unter der Einwirkung von Bakterien der Art Xanthomonas campestris erhaltener Biogummi ist.

5. Verwendung nach einem der Ansprüche 1 bis 4, dadurch gekennzeichnet, dass der wasserlösliche Gummi ein Pflanzengummi wie Agar-Agar, Alginate, Carraghenate, Gummiarabicum, Tragant, Carubingummi, Guargummi, Pectin oder Gelatine ist.

6. Verwendung nach einem der Ansprüche 1 bis 5, dadurch gekennzeichnet, dass der wasserlösliche Gummi ein Natriumalginat, Tragant, Pectin oder Gelatine ist.

7. Verwendung nach einem der Ansprüche 1 bis 6, dadurch gekennzeichnet, dass der wasserlösliche Gummi ein synthetischer Gummi wie die Polyacrylsäuren und Polymethacrylsäuren, deren Salze oder deren Ester; die Polyacrylamide und die Polymethacrylamide sowie die Derivate dieser Polymeren ist.

8. Verwendung nach einem der Ansprüche 1 bis 7, dadurch gekennzeichnet, dass der wasserlösliche Gummi ein durch Polymerisation oder Copolymerisation der folgenden Monomeren: Acrylamid, Methacrylamid, Acrylsäure und Methacrylsäure, deren Salze und Ester, Aminoalkylacrylate und -methacrylate, die gegebenenfalls quaternisiert sind, erhaltener synthetischer Gummi ist.

9. Verwendung nach einem der Ansprüche 1 bis 8, dadurch gekennzeichnet, dass das wasserliefernde Material eine feine gefällte Kieselsäure, ein Kieselsäurehydratgel, ein Gel von entwässerter Kieselsäure, ein natürliches oder synthetisches Tonerde- bzw. Aluminiumoxidhydrat, ein Ton, ein natürlicher oder synthetischer Zeolith oder ein Hydrat von anorganischen oder organischen Salzen ist.

10. Verwendung nach einem der Ansprüche 1 bis 9, dadurch gekennzeichnet, dass das wasserliefernde Material ein Hydrat der folgenden, einzeln, im Gemisch oder in Form von Kombinationen eingesetzen Salze ist: Carbonate, Halogenide, Nitrate, Phosphate, Silicate, Sulfate, sowie Acetate, Citrate, Lactate, Laurate und Tartrate von Natrium, Kalium, Calcium und Magnesium.

11. Verwendung nach einem der Ansprüche 1 bis 10, dadurch gekennzeichnet, dass das wasserliefernde Material eine gefällte Kieselsäure mit einer BET-Oberfläche von 200 bis 400 $m^2/g$ und einem Teilchendurchmesser von 200 bis 800 Å, ein Natriumacetat-trihydrat, ein Calciumlactatpentahydrat ist.

12. Verwendung nach einem der Ansprüche 1 bis 11, dadurch gekennzeichnet, dass die (Pulver)-masse zusätzlich ein anionisches und/oder nichtionisches Tensid enthält.

13. Verwendung nach einem der Ansprüche 1 bis 12, dadurch gekennzeichnet, dass das Tensid ein anionisches Tensid wie die Alkaliseifen, Alkalisulfonate, Sulfate und sulfatierten Produkte und Alkaliphosphate und/oder ein nichtionisches Tensid wie die Kondensationsprodukte aus Ethylenoxid und Alkylphenolen oder aliphatischen Alkoholen, Fettsäurenamide und Polyoxyenthylen- sowie Polyoxypropylenderivate ist.

14. Verwendung nach einem der Ansprüche 1 bis 13, dadurch gekennzeichnet, dass das Tensid ein Natrium-diisopropylnaphthalinsulfonat ist.

15. Verwendung nach einem der Ansprüche 1 bis 14, dadurch gekennzeichnet, dass die Wassermenge in der (Pulver)masse einem Gewichtsverhältnis von Gummi zu Wasser von 2,5 bis 1 entspricht.

16. Verwendung nach einem der Ansprüche 1 bis 15, dadurch gekennzeichnet, dass die Menge des wasserliefernden Materials einem Gewichtsverhältnis von wasserlieferndem Material zu Wasser von 0,3 bis 0,6 entspricht.

17. Verwendung nach einem der Ansprüche 1 bis 16, dadurch gekennzeichnet, dass die Tensidmenge einem Verhältnis von Gewicht des Tensids zu Gesamtgewicht der Masse von 0 bis 0,10, vorzugsweise von 0 bis 0,07 entspricht.

18. Verwendung nach einem der Ansprüche 1 bis 17, dadurch gekennzeichnet, dass die (Pulver)-masse enthält:
30 bis 70 Gew.-% wasserlöslichen Gummi
7 bis 40 Gew.-% wasserlieferndes Material
0 bis 10 Gew.-% anionisches und/oder nichtionisches Tensid
15 bis 37 Gew.-% Wasser.

19. Verwendung nach Anspruch 18, dadurch gekennzeichnet, dass die (Pulver)masse enthält:
50 bis 60 Gew.-% wasserlöslichen Gummi
8 bis 15 Gew.-% wasserlieferndes Material
0 bis 7 Gew.-% anionisches und/oder nichtionisches Tensid
24 bis 36 Gew.-% Wasser.

20. Verfahren zum Ausflocken, vor allem zur Behandlung von Wässern, dadurch gekennzeichnet, dass man ein Wasser mit einem pH-Wert von 6 bis 9 mit einem Flockungsmittel auf der Basis eines Metalls aus der Gruppe Eisen und/oder Aluminium behandelt und dann das Flockungsmittel gemäss einem der Ansprüche 1 bis 19 zusetzt.

21. Verfahren nach Anspruch 20, dadurch gekennzeichnet, dass das Flockungsmittel ein Aluminiumsulfat, -chlorid oder -hydroxychlorid oder ein Eisen-III-chlorid oder -chlorsulfat ist.